Europäisches Patentamt

European Patent Office

Office européen des brevets

(11) Publication number: **0 173 237**
**B1**

## EUROPEAN PATENT SPECIFICATION

(45) Date of publication of patent specification: **31.05.89**

(51) Int. Cl.⁴: **B 60 J 1/17**

(21) Application number: **85110465.3**

(22) Date of filing: **20.08.85**

(54) Construction for mounting slider of door glass in motor vehicle.

(30) Priority: **21.08.84 JP 126868/84 u**

(43) Date of publication of application:
**05.03.86 Bulletin 86/10**

(45) Publication of the grant of the patent:
**31.05.89 Bulletin 89/22**

(84) Designated Contracting States:
**DE FR GB**

(56) References cited:
**EP-A-0 040 588**
**DE-A-2 847 404**
**US-A-2 024 773**

(73) Proprietor: **TOYOTA JIDOSHA KABUSHIKI KAISHA**
**1, Toyota-cho Toyota-shi**
**Aichi-ken 471 (JP)**

(72) Inventor: **Okamoto, Yuji**
**c/o TOYOTA JIDOSHA K.K. 1, Toyota-cho**
**Toyota-shi Aichi-ken (JP)**

(74) Representative: **Grams, Klaus Dieter, Dipl.-Ing.**
**et al**
**Patentanwaltsbüro Tiedtke-Bühling-Kinne-**
**Grupe-Pellmann-Grams-Struif Winter-Roth**
**Bavariaring 4**
**D-8000 München 2 (DE)**

Courier Press, Leamington Spa, England.

## Description

This invention relates to a window construction for vehicle bodies of a motor vehicle according to the pre-characterizing portion of claim 1.

Door glasses are subjected to a force sucking the door glasses outwardly due to a difference in pressure between the interior and the exterior of a compartment during running of a motor vehicle at high speed.

To restrain the door glass in the direction of the thickness thereof to control an outward displacement of the door glass during running at high speed, end edges of the door glass in the longitudinal direction thereof are guided by door glass guides being U-shaped in cross-section.

Here, such disadvantages are presented that the outer side portion of the door glass guide should necessarily be protruded outwardly from the outer surface of the door glass to increase air resistance during running of the motor vehicle at high speed and a so-called wind whistle is increased.

To obviate the above-described disadvantages, as disclosed in US—A—2024773 for example, there has been proposed a window construction, in which sliders being generally crank-shaped in cross section are secured to the end edges of the door glass in the longitudinal direction, and the forward end of the slider, which protrudes into the compartment, is guided in the vertical direction by guides provided on the door frame.

In this case, the outer surfaces of the door frame and of the door glass can be made generally flush with each other.

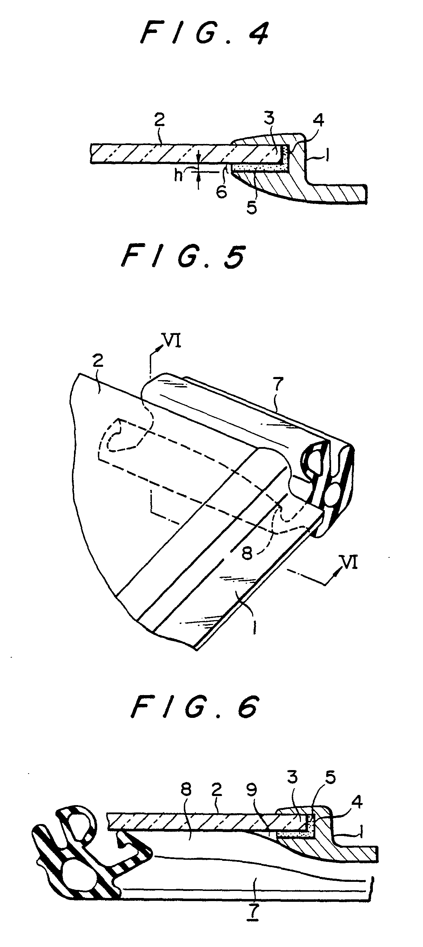

In the prior art it is also known, as shown in Fig. 4, to provide a window construction for mounting a slider to a door glass in the longitudinal direction of the end edge thereof, wherein a recess 4, into which the vertical end edge 3 of the door glass 2 is inserted, is formed at an end portion of the slider 1, and an adhesive 5 is applied into the recess 4 to secure the slider 1 to the end edge 3 of the door glass 2 in the longitudinal direction thereof.

In the conventional construction for mounting the slider as described above, in general, the width of the recess 4 in the thickness-wise direction of the door glass 2 is made larger than the thickness of the end edge 3 of the door glass 2, whereby an adhesive accumulated portion 6 with a thickness h is formed.

The slider 1 is extended along the end edge 3 to the top end thereof.

In consequence, the slider 1 is adapted to contact an upper door glass weather strip 7 secured along the top side of the door frame, not shown, when the door glass 2 is fully closed (Refer to Fig. 5).

In this case, since a lip 8 of the upper door glass weather strip 7 extends in a direction substantially perpendicularly intersecting the slider 1, such a disadvantage is presented that, as shown in Fig. 6, when the door glass 2 is fully closed, a generally triangular gap 9 due to a difference in stage as large as the thickness h of the adhesive accumulated portion 6 is formed at the end face of the slider 1 on the side of the center of the door glass, whereby the sealing between the door glass 2 and the door frame is deteriorated.

It is therefore the primary object of the present invention to provide window construction for vehicle bodies, wherein a gap in a position at a top end portion of the slider is not formed to thereby improve the sealing performance.

This object is achieved by the features of the characterizing portion of claim 1.

The recess is decreased in width at the upright top end portion of the slider, where the latter contacts the upper door glass weather strip secured to the upper frame member of the door frame when the door glass is fully closed, so that the adhesive accumulation in the thickness-wise direction of the door glass does not exist at the top end portion of the vertical edge of the door glass and a triangular gap can be eliminated when the slider contacts the upper door glass weather strip.

Advantageous modifications of the invention derive from the subclaims.

Fig. 1 is a perspective view showing one embodiment of the window construction for mounting a slider to a door glass of a motor vehicle according to the present invention.

Fig. 2 is an enlarged sectional view taken along the line II—II in Fig. 1;

Fig. 3 is a sectional view showing an upper door glass weather strip when the door glass is fully closed;

Fig. 4 is a sectional view similar to Fig. 2, showing the conventional window construction for mounting a slider to a door glass of a motor vehicle;

Fig. 5 is a perspective view showing the state, when the door glass of Fig. 4 is fully closed; and

Fig. 6 is a sectional view taken along the line VI—VI in Fig. 5, showing an upper door glass weather strip in the conventional construction.

Description will hereunder be given of one embodiment of the present invention with reference to the drawings.

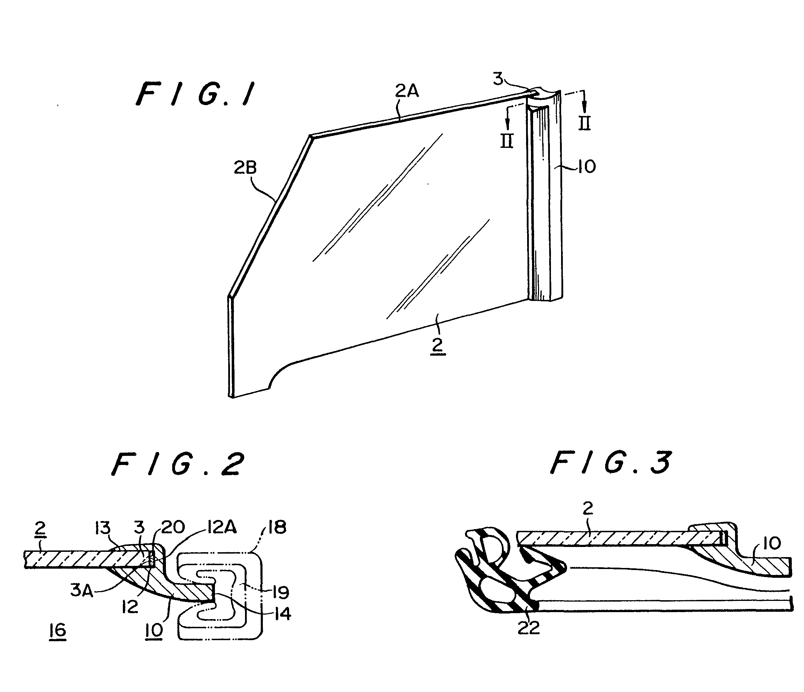

As shown in Figs. 1 and 2, a slider 10 is provided at an end portion thereof with a recess 12, into which a vertical edge 3 of a door glass 2 is inserted. The slider 10 protrudes at its opposite end portion 14 from the door glass 2 into a vehicle compartment 16 and it is guided by a guide portion 19 of a door frame 18 in the opening or closing direction of the door glass 2. It is coupled at its recess 12 to the vertical edge 3 of the door glass 2 and secured to the door glass 2 by an adhesive 20 applied into the recess 12. At its upright top end portion of the slider 10 where it contacts an upper door glass weather strip 22 secured to an upper frame member of the door frame 18, not shown, when the door glass 2 is fully closed, the thickness of the recess 12 is made substantially equal to the thickness of the door glass 2, to thereby form a narrow width portion 13; the adhesive 20 is there applied only between a bottom face 12A of the recess 12 and an end face 3A of the vertical edge 3 of the door glass 2.

In the cross section of a portion other than the upright top end portion where the slider 10 contacts the door glass weather strip 22, an adhesive accumulated portion 6 is formed in the thickness-wise direction of the door glass 2 similarly to the conventional slider as shown in Fig. 4.

With the above-described arrangement, at the upright top end portion of the slider 10 where the latter contacts the upper door glass weather strip 22, the adhesive accumulated portion in the thickness-wise direction of the glass is not present between the recess 12 and the vertical edge 3 of the door glass 2, whereby, even when the door glass 2 is fully closed, the upper door glass weather strip 22 smoothly and continuously contacts a portion from the inner surface of the door glass 2 to the inner surface of the slider 10 as shown in Fig. 3, so that a triangular gap 9 as shown in Fig. 6 is not formed.

In consequence, the sealing performance by the upper door glass weather strip 22 between the top side of the door frame 18 and the door glass 2 can be improved.

Additionally, at a portion where the slider 10 contacts the upper door glass weather strip 22 secured to the upper frame member of the door frame 18 extending along a horizontal upper end edge 2A of the door glass 2, the narrow width portion 13 is formed in the recess 12. However, on the side of the forward end edge of the door glass 2, similarly, a narrow width portion 13 of the recess can be formed on a portion contacting the upper door glass weather strip 22 along an inclined upper frame member of the door frame 18, not shown, formed along an inclined upper end edge 2B of the door glass 2.

Here, a question has arisen as to the adhesive force of the adhesive 20 applied only between the bottom face 12A of the recess 12 and the end face 3A of the door glass 2. According to experiements, it is found that omission of the adhesive accumulation at the portion where the slider 10 contacts the top door glass weather strip 22 does not affect the adhesive force.

## Claims

1. Window construction for vehicle bodies comprising: upright door frame members and an upper door frame member along which extends an upper door glass weather strip (22) secured to same

a door glass (2) provided with a slider (10) for guiding said door glass (2) as it slides upwardly or downwardly with respect to the door frame (18) into a closing or opening position, said slider (10) having an end portion with a recess (12) into which vertical edge (3) of aid door glass (2) is inserted, whereas said slider (10) and said vertical edge (3) of said door glass (2) are secured to each other by an adhesive (20) applied into said recess (12) whereas the opposite end portion (14) of said slider (10) protrudes inwardly towards the vehicle interior and is guided by a guide portion (19) in an upright door frame (18) member, characterized in that, over the upright top end portion of said slider (10) when the latter contacts the upper door glass weather strip (22) when said door glass (2) is fully closed, the width of said recess (12) is made substantially equal to the thickness of said door glass (2) and said adhesive (20) is applied only between a bottom face (12A) of said recess (12) and an end face (3A) of said vertical edge (3) of said door glass (2).

2. Window construction according to claim 1, wherein in the structure of cross-section of a portion other than said upright top end portion where said slider (10) contacts said upper door glass weather strip (22), an adhesive accumulated portion (6) is formed in the thickness-wise direction of said door glass (2).

3. Window construction according to claim 1 or 2, wherein a narrow width portion (13) is formed in said recess (12) at the upright top end portion of the slider, where the latter contacts said upper door glass weather strip (22).

4. Window construction according to claim 1, 2 or 3, wherein at the forward end edge of said door glass (2) a narrow width portion (13) of said recess (12) is formed on a portion of said slider contacting said upper door glass weather strip (22) along an inclined upper frame member extending along an inclined upper end edge (2B) of said door glass (2).

## Patentansprüche

1. Fensterkonstruktion für Fahrzeugkarrosserien mit aufrechten Türrahmenteilen und einem oberen Türrahmenteil, dem entlang sich ein daran befestigter Türglasoberkantendichtungsstreifen (22) erstreckt, einem Türglas (2), das mit einem Gleitstück (10) zur Führung des Türglases (2), wenn aufwärts oder abwärts in bezug auf den Türrahmen (18) in eine geschlossene oder geöffnete Stellung gleitet, versehen ist, wobei das Gleitstück (10) einen Endabschnitt mit einer Ausnehmung (12) aufweist, in die eine vertikale Seitenkante (3) des Türglases (2) eingesetzt ist, wobei das Gleitstück (10) und die vertikale Seitenkante (3) des Türglases (2) mittels eines in die Ausnehmung (12) eingebrachten Haftmittels (20) aneinander befestigt sind, wobei der entgegengesetzte Endabschnitt (14) des Gleitstücks (10) in das Fahrzeuginnere vorsteht und durch einen Führungsabschnitt in einem aufrechten Türrahmenteil geführt wird, dadurch gekennzeichnet, daß über den aufrechten oberen Endabschnitt des Gleitstücks (10), wenn dieses in Anlage an den Türglasoberkantendichtungsstreifen (22) gerät, wenn das Türglas (2) vollständig geschlossen ist, die Tiefe der Ausnehmung (12) etwa gleich bemessen ist wie die Dicke des Türglases (2), wobei das Haftmittel (20) nur zwischen eine Grundfläche (12A) der Ausnehmung (12) und eine Endfläche (3A) der vertikalen Seitenkante (3) des Türglases (2) eingebracht ist.

2. Fensterkonstruktion nach Anspruch 1, bei der in dem Querschnittaufbau eines Abschnitts, der nicht dem aufrechten oberen Endabschnitt entspricht, an dem das Gleitstück (10) in Anlage gegen den Türglasoberkantendichtungsstreifen (22) gerät, ein Abschnitt (6) mit angesammeltem Haftmittel in der Dickenrichtung des Türglases (2) ausgebildet ist.

3. Fensterkonstruktion nach Anspruch 1 oder 2, bei der ein Abschnitt (13) geringer Weite in der Ausnehmung (12) an dem aufrechten oberen Endabsachnitt des Gleitstücks ausgebildet ist, an dem das letztere mit dem Türglasoberkantendichtungsstreifen (22) in Anlage gerät.

4. Fensterkonstruktion nach Anspruch 1, 2 oder 3, bei der an der vorderen Seitenkante des Türglases (2) ein Abschnitt (13) geringer Weite der Ausnehmung (12) auf einem Abschnitt des Gleitstücks ausgebildet ist, an dem dieses mit dem Türglasoberkantendichtungsstreifen (22) längs einem geneigten oberen Rahmenteil in Anlage gerät, das sich längs einer geneigten Oberkante (2B) des Türglases (2) erstreckt.

**Revendications**

1. Structure de fenêtre pour carrosseries de véhicule comprenant des organes d'encadrement de portière formant montants et un organe supérieur d'encadrement de portière le long duquel s'étend une bande supérieure d'étanchéité de vitre de portière (22) fixée audit organe supérieur, une vitre de portière (2) équipée d'une coulisse (10) assurant son guidage dans son déplacement par glissement vers le haut ou vers le bas par rapport au cadre de portière (18) pour assurer la fermeture ou l'ouverture de la vitre, ladite coulisse (10) présentant une partie d'extrémité munie d'une cavité (12) dans laquelle est inséré le bord vertical (3) de ladite vitre de portière (2), tandis que ladite coulisse (10) et ledit bord vertical (3) de ladite vitre de portière (2) sont fixés l'un à l'autre par un adhésif (20) appliqué dans ladite cavité (12), alors que la partie d'extrémité opposée (14) de ladite coulisse (10) fait saillie intérieurement vers l'intérieur du véhicule et est guidée par une partie de guidage (19) dans un organe de cadre de portière vertical (18), caractérisé en ce que sur la partie d'extrémité de bord vertical supérieur de ladite coulisse (10), quand cette dernière vient en contact avec la garniture d'étanchéité supérieure (22) de la vitre de portière (2) lorsque ladite vitre de portière (2) est complètement fermée, la largeur de ladite cavité (12) est rendue sensiblement égale à l'épaisseur de ladite vitre de portière (2) et ledit adhésif (20) est appliqué uniquement entre une face de fond (12A) de ladite cavité (12) et une face d'extrémité (3A) dudit bord vertical (3) de ladite vitre de portière (2).

2. Structure de fenêtre selon la revendication 1, dans laquelle, dans la structure de section transversale d'une partie autre que ladite partie d'extrémité supérieure verticale où ladite coulisse (10) vient en contact avec ladite bande d'étanchéité supérieure de la vitre de portière, une partie adhésive accumulée (6) est formée dans le sens de l'épaisseur de cette vitre de portière (2).

3. Structure de fenêtre selon la revendication 1 ou 2, dans laquelle une partie de faible largeur (13) est formée dans ladite cavité (12) de la partie d'extrémité supérieure de montant de la coulisse, là où cette dernière vient en contact avec ladite garniture supérieure d'étanchéité (22) de vitre de portière.

4. Structure de fenêtre selon la revendication 1, 2 ou 3, dans laquelle une partie de faible largeur (13) de ladite cavité (12) est formée au bord d'extrémité avant de ladite vitre de portière (2) sur une partie de ladite coulisse venant en contact avec ladite bande supérieure d'étanchéité (22) de vitre de portière le long d'un organe d'encadrement supérieur incliné longeant un bord extrême supérieur incliné (2B) de ladite vitre de portière (2).

*FIG. 1*

*FIG. 2*

*FIG. 3*

# F I G . 4

# F I G . 5

# F I G . 6

2